# EUROPÄISCHE PATENTSCHRIFT

(11) **EP 0 978 367 B1**
(45) Veröffentlichungstag und Bekanntmachung des Hinweises auf die Patenterteilung: **23.04.2003**
(21) Anmeldenummer: 99113125.1
(22) Anmeldetag: 07.07.1999
(51) Int. Cl.: B29C 53/60, B29C 70/32, F16S 3/00

(54) **Hochsteifes CFK-Rohr für schnelle Massenbewegung und Verfahren zu seiner Herstellung**
Highly rigid profile reinforced with carbon fibres for fast moving vehicles and process for manufacturing it
Profilé en fibres de carbone ayant une rigidité élevée utilisé dans la construction de véhicules rapides et son procédé de fabrication

(30) Priorität: 01.08.1998 DE 19834873
(43) Veröffentlichungstag der Anmeldung: 09.02.2000
(73) Patentinhaber: Astrium GmbH, 81663 München (DE)
(72) Erfinder: Zankl, Wolfgang, 88048 Friedrichshafen (DE)
(74) Vertreter: Meel, Thomas

(56) Entgegenhaltungen:
- WO-A-97/03820
- DE-A- 4 200 955
- US-A- 4 900 048
- US-A- 5 362 345

## Beschreibung

Die Erfindung betrifft ein aus C-Fasern gewickeltes, geschlossenes Hohlprofil in Form eines Rohres mit kreisförmigem, rechteckigem oder quadratischem Querschnitt.

Rohre dieser Art sind bekannt und können als Bauteile von Fahrzeugen und Geräten eingesetzt werden, wenn der Vorteil des geringen Gewichts die höheren Herstellkosten, z. B. gegenüber Strangpressprofilen rechtfertigt.

Aufgabe der Erfindung ist es, bei gewickelten CFK-Profilen die Formsteifigkeit des Querschnitts unter hohen Belastungen zu verbessern.

Diese Aufgabe wird erfindungsgemäss durch den Gegenstand des Patentanspruchs 1 gelöst; die Unteransprüche betreffen vorteilhafte Ausgestaltungen der Erfindung.

Das erfindungsgemässe Bauteil ist ein Hohlprofil, welches innen mit einem zweiten Hohlprofil fachwerkähnlich versteift ist.

Die Erfindung wird nachfolgend anhand von Fig. näher erläutert. Es zeigen
- Fig. 1 und 2: das Problem - die Aufgabe der Erfindung - anhand eines zum Stand der Technik gehörenden Hohlprofils
- Fig. 3 und 4: die Lösung des Problems anhand des erfindungsgemässen Hohlprofils
- Fig. 5: eine Einzelheit von Fig. 4
- Fig. 6, 7 und 8: gewickelte CFK-Hohlprofile mit integriertem aussteifendem Fachwerk.

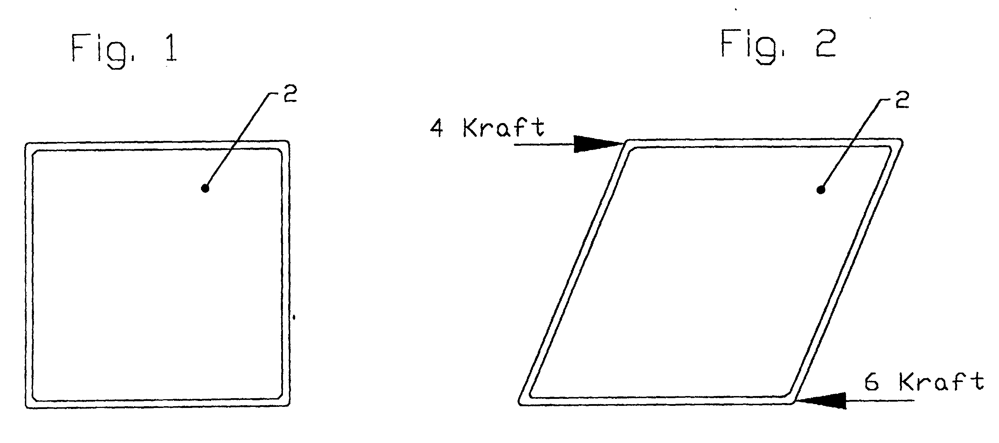

Fig. 1 zeigt ein zum Stand der Technik gehörendes, gewickeltes Hohlprofil 2 mit rechteckigem Querschnitt, das sich unter Einwirkung der Kräfte 4, 6 verformt, wie in Fig. 2 gezeigt. Die Formsteifigkeit unter hoher Belastung ist nicht gegeben.

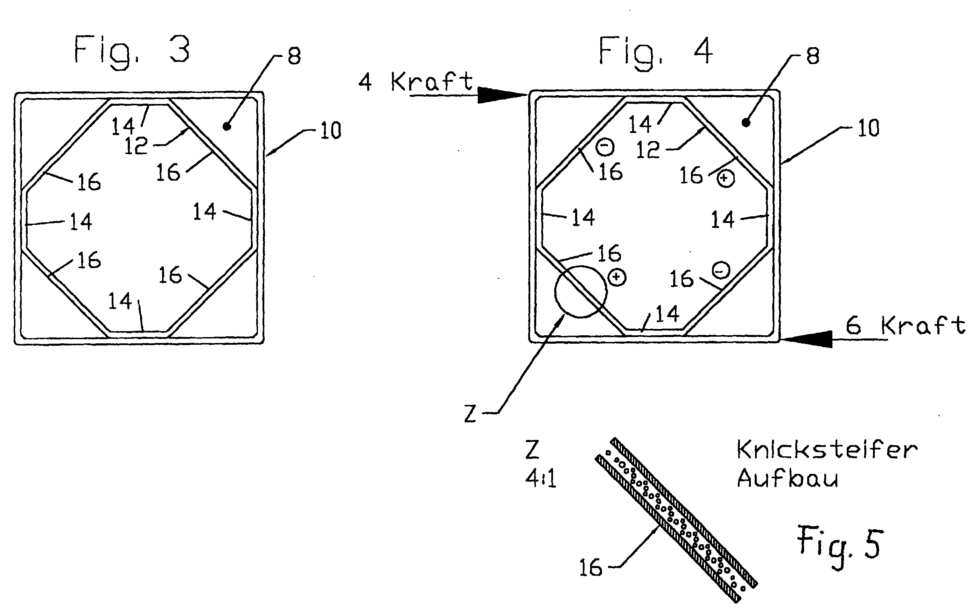

Fig. 3 bis 5 zeigen ein erfindungsgemässes Hohlprofil 8, das aus einem Aussenprofil 10 und einem Innenprofil 12 besteht. Das Innenprofil 12 versteift das Aussenprofil 10 nach Art eines Fachwerks. Beide Profile sind an den Stegen 14 einstückig. Wirken nun auf das Hohlprofil 8 die Kräfte 4, 6 von Fig. 2 so tritt wegen der erhöhten Formsteifigkeit des erfindungsgemässen Hohlprofils 8 keine oder nur eine tolerierbare elastische Verformung auf. Das fachwerkähnliche integrale Innenprofil 12 bringt eine technisch gute Lösung für das Problem der Formsteifigkeit. Eine Einzelheit einer knicksteifen Strebe 16 von Fig. 3 und 4 ist in Fig. 5 gezeigt.

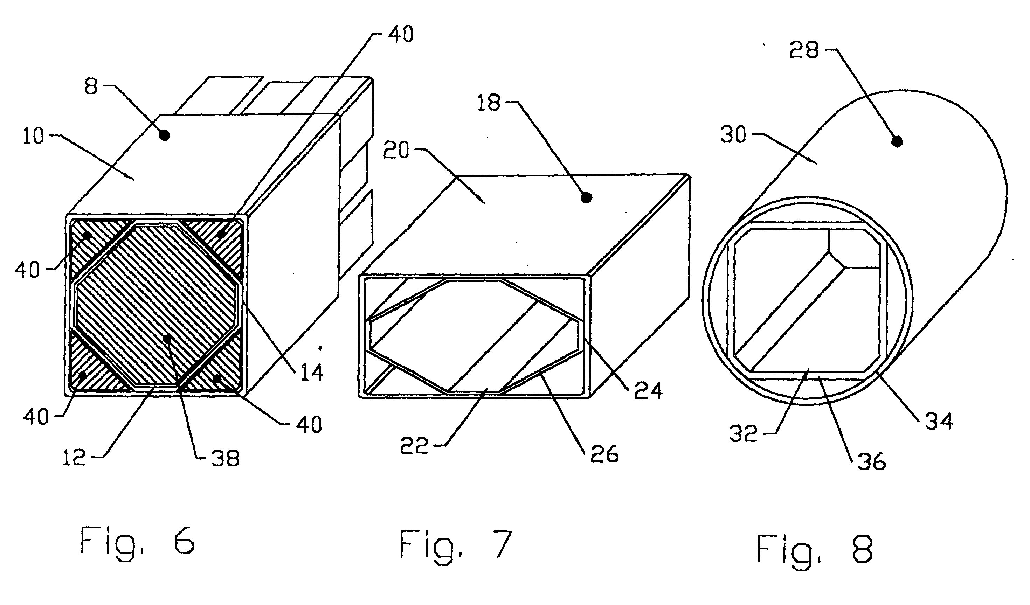

- Fig. 6: zeigt das erfindungsgemässe Profil 8 in axonometrischer Darstellung. In dieser Darstellungsweise sind auch die Fig. 7 und 8 gezeichnet.
- Fig. 7: zeigt ein Hohlprofil 18 mit rechteckförmigem Aussenprofil 20 und rautenförmigem Innenprofil 22, Stegen 24 und Streben 26.
- Fig. 8: zeigt ein Hohlprofil 28 mit kreisförmigem Aussenprofil 30, rechteckförmigem Innenprofil 32, Stegen 34 und Streben 36.

Nachfolgend wird das Herstellungsverfahren für die Hohlprofile 8, 18 und 28 beschrieben, wobei die Formkerne in Fig. 6 skizziert sind.

Die Profile 8, 18, 28 werden im Naßwickelverfahren hergestellt, wobei die trockenen Rovings ein Imprägnierbad an einer Mashine durchlaufen und dann auf einem Kern abgelegt werden.

Das Innenprofil 12, 22, 32 wird mit seinen verschiedenen Lageaufbauten auf einen Wickelkem 38 gewickelt, welches später die vierseitge fachwerkähnliche Versteifung bildet.

Anschließend werden auf der Aussenseite des noch nassen Innenprofils 12, 22, 32 Wickelkernprofile 40 fixiert. Diese sind so angeordnet, daß mehrere Stege 14, 24, 34 freibleiben, welche nach dem Wickeln des äußeren Profilteils eine Verbindung zwischen Innen- und Außenprofil darstellen.

Nach dem Aushärten ist der Übergang an den Verbindungsstegen 14, 24, 34 zwischen Innen- und Außenprofil nahtlos, d. h. die beiden Profile sind zu einem Bauteil 'verschmolzen'. Die Ausdehnung der äußeren Wickelkernprofile ist dabei so groß gegenüber dem inneren Wickelkern, daß eine sichere Entformung gewährleistet ist.

## Patentansprüche

1. Aus C-Fasern gewickeltes, geschlossenes Hohlprofil, **dadurch gekennzeichnet, dass** in der Bohrung eines gewickelten Außenprofils (10, 20, 30) ein gewickeltes, geschlossenes, aussteifendes Innenprofil (12, 22, 32) angeordnet ist und dass beide Profile an mehreren Stegen (14; 24; 34) miteinander einstückig sind.

2. Hohlprofil nach Anspruch 1, **dadurch gekennzeichnet, dass** das Aussenprofil im Querschnitt kreisförmig, quadratisch oder rechteckig ist.

3. Hohlprofil nach Anspruch 1 oder 2, **dadurch gekennzeichnet, dass** das Innenprofil im Querschnitt quadratisch, rechteckförmig oder rautenförmig ist und an den Kanten Stege gebildet sind, die das Aussenprofil tangieren.

4. Verfahren zur Herstellung von Profilen nach Ansprüchen 1 - 3 **dadurch gekennzeichnet, dass**
- das Innenprofil mit seinen verschiedenen Lagen auf einen Kern im Nasswikkelverfahren gewickelt wird,
- auf dem noch nassen Innenprofil mehrere Kernprofile fixiert werden, die so angeordnet sind, dass mehrere Stege freibleiben, welche nach dem Wickeln des äusseren Profilteils eine Verbindung bilden,
- nach dem Aushärten der Profile Innen- und Aussenprofil an den Stegen nahtlos miteinander zu einem Bauteil verschmolzen sind,
- die Kerne entnommen werden.

## Claims

1. Closed hollow profile wound from carbon fibres, **characterized in that** a wound, closed, reinforcing inner profile (12, 22, 32) is arranged in the bore of a wound outer profile (10, 20, 30), and **in that** the two profiles are in one piece with one another at a plurality of webs (14; 24; 34).

2. Hollow profile according to Claim 1, **characterized in that** the outer profile is circular, square or rectangular in cross section.

3. Hollow profile according to Claim 1 or 2, **characterized in that** the inner profile is square, rectangular or rhombic in cross section and webs which are tangential to the outer profile are formed at the edges.

4. Process for the production of profiles according to Claims 1 - 3, **characterized in that**
- the inner profile, with its various plies, is wound onto a core using the wet-winding technique,
- a plurality of core profiles are fixed on the inner profile while it is still wet and are arranged in such a way as to leave uncovered a plurality of webs which form a joint after the outer profile part has been wound,
- after the profiles have been cured, the inner and outer profile are seamlessly fused together at the webs to form a component,
- the cores are removed.

## Revendications

1. Profilé creux fermé, en fibres de C posées en spirale, **caractérisé en ce qu'**un profilé intérieur de renfort (12, 22, 32) fermé en fibres posées en spirale est disposé dans l'alésage d'un profilé extérieur (10, 20, 30) en fibres posées en spirale, et **en ce que** les deux profilés sont reliés d'un seul tenant l'un à l'autre par plusieurs ailes (14; 24; 34).

2. Profilé creux selon la revendication 1, **caractérisé en ce que** la section transversale du profilé extérieur est circulaire, carrée ou rectangulaire.

3. Profilé creux selon la revendication 1 ou 2, **caractérisé en ce que** la section transversale du profilé intérieur est carrée, rectangulaire ou en losange, et **en ce que** sur ses arêtes sont formées des ailes qui sont tangentes au profilé extérieur.

4. Procédé pour la fabrication de profilés selon les revendications 1 à 3, **caractérisé en ce que**
- les différentes couches du profilé intérieur sont enroulées sur une âme par un procédé d'enroulement à l'état humide,
- plusieurs profilés d'âme, qui sont disposés de manière à laisser libres plusieurs ailes qui forment une liaison après l'enroulement de la partie extérieure du profilé, sont fixés sur le profilé intérieur encore humide,
- après le durcissement des profilés, le profilé intérieur et le profilé extérieur sont fondus l'un avec l'autre sans soudure au droit des ailes, pour former un seul composant, et
- les âmes sont enlevées.
